# EUROPÄISCHE PATENTSCHRIFT

(11) **EP 0 522 239 B1**
(45) Veröffentlichungstag und Bekanntmachung des Hinweises auf die Patenterteilung: **12.06.1996**
(21) Anmeldenummer: 92104423.6
(22) Anmeldetag: 13.03.1992
(51) Int. Cl.: A61C 5/04, A61C 5/06

(54) **Instrument zum Applizieren von Haft- oder Füllmaterialien auf Zahnflächen**
Instrument for applying adhesive and filler material to dental surfaces
Instrument pour l'application des produits collants et d'obturation sur des surfaces dentaires

(30) Priorität: 11.07.1991 EP 91111582
(43) Veröffentlichungstag der Anmeldung: 13.01.1993
(73) Patentinhaber: SIEMENS AKTIENGESELLSCHAFT, D-80333 München (DE)
(72) Erfinder: Lehmann, Karl-Heinz, Dipl.-Ing. (FH), W-6148 Heppenheim (DE); Bierbaum., Thoas, Dipl.-Ing. (FH), W-6143 Lorsch (DE)

(56) Entgegenhaltungen:
- EP-A- 0 238 778
- US-A- 3 028 672
- US-A- 4 582 488
- US-A- 4 684 344

## Beschreibung

Die Erfindung bezieht sich auf ein Instrument zum Applizieren von Haft- oder Füllmaterialien auf Zahnflächen entsprechend dem Oberbegriff des Patentanspruches 1. Ein solches Instrument ist beispielsweise in der US-PS 4 684 344 beschrieben.

Bei der konservierenden Zahnbehandlung stellt sich häufig das Problem, bestimmte pastöse oder plastifizierbare Haft- oder Füllmaterialien, die heute meist gebrauchsfertig angeboten werden, unter Vermeidung einer umständlichen Handhabung fein dosierbar auf Zahnflächen applizieren zu können.

Bei der Behandlung von Wurzelkanälen beispielsweise besteht das Problem, anstelle der Pulpa einen geeigneten gewebeverträglichen Stoff in den Wurzelkanal applizieren zu können. Als Füllmaterial hat ich hier Guttapercha besonders gut bewährt. Dieses Material ist bei etwa 48°C weich und knetbar und geht bei etwa 110° in einen plastisch-fließfähigen Zustand über. Um die Fließfähigkeit zu optimieren und die Härte sowie Zug- und Bruchfestigkeit zu verbessern, werden diesem Material häufig auch noch Zusätze beigemischt.

Zum Applizieren solcher Materialien sind verschiedene Vorrichtungen bekannt.

Aus der US-PS 4 265 618 ist es beispielsweise bekannt, derartige Füllmaterialien nach der Injektionsmethode zu applizieren, und zwar mit Hilfe einer beheizten Injektionsspritze unter Verwendung spezieller Guttapercha-Stäbchen. Mit einer solchen Injektionsspritze ist es kaum möglich, einen Wurzelkanal in einem Arbeitsgang ohne Zwischenerwärmung zu befüllen.

Bei einem anderen, unter der Bezeichnung 'Optura II' der Fa. Texceed Corp. bekannten Gerät, welches nach Art einer Spritzpistole ausgebildet und zu handhaben ist, werden separate Mehrwegkanülen verwendet. Dieses Gerät ist, wie die zuvor beschriebene Injektionsspritze, manuell zu betreiben, indem durch Betätigen eines Abzughebels über einen mechanischen Zahnstangenvorschub ein Kolben verstellt wird, der die Guttapercha aus der Mehrwegkanüle ausstößt. Die Erwärmung der Guttapercha geschieht mittels einer in der Pistole integrierten Heizpatrone, die mit mehreren einstellbaren Heizleistungen betreibbar ist. Das Erreichen der einstellbaren Arbeitstemperatur wird dabei optisch angezeigt. Die Kanülen sind direkt über einen Schraubverschluß mit der Heizpatrone verbunden und werden durch Wärmeleitung beheizt.

Nachteilig bei diesem bekannten Gerät ist, daß die Guttapercha auf ca. 160°, also über den notwendigen Schmelzpunkt, erhitzt werden muß, um applikationsfähig zu sein. Zum Schutz vor Brandverletzungen sind deshalb separate Wärmeschutztüllen vorgesehen, die wegen der Infektionsgefahr nach jeder Behandlung ausgetauscht werden müssen.

Ein weiterer Nachteil des bekannten Gerätes ist darin zu sehen, daß wegen der Pistolenform und auch der Größe der Spritze eine Applikation insbesondere im Molarbereich erschwert ist. Desgleichen ist eine genaue Festlegung der Wurzelfüllänge relativ schwierig. Eine kontrollierte Führung der Kanülenspritze ist auch wegen der ständig notwendigen Handhabung zum Betätigen des Abzugshebels während des Füllvorganges nicht möglich.

Problematisch bei allen beheizbaren Instrumenten dieser Gattung ist, daß sich durch die relativ hohen Temperaturen, die notwendig sind, um das Material in einen plastisch-fließfähigen Zustand überzuführen, die äußeren Mantelflächen unzulässig hoch erwärmen können.

Der im Anspruch 1 angegebenen Erfindung liegt die Aufgabe zugrunde, ein Instrument der eingangs genannten Gattung anzugeben, mit dem eine unzulässig hohe Erwärmung der äußeren Mantelflächen des Instruments wirksam verhindert werden kann.

Gemäß einer vorteilhaften Ausgestaltung der Erfindung weist das Instrument vorteilhafterweise eine integriere Beleuchtungseinrichtung zur Ausleuchtung des Arbeitsfeldes auf. Diese Beleuchtungseinrichtung kann im Falle einer Anordnung einer Lichtquelle direkt am vorderen Ende des Instruments so gestaltet sein, daß die Lichtquelle in unmittelbarer Nachbarschaft der Patrone angeordnet ist, so daß die von der Lichtquelle ausgehende Erwärmung mit zur Erwärmung des in der Patrone angeordneten Füllmaterials ausgenutzt werden kann. Im Falle der Anordnung der Lichtquelle am rückwärtigen Ende des Instruments oder auch extern des Instruments und einer innerhalb des Griffkörpers vorgesehenen Lichtleiteranordnung wird vorteilhafterweise vorgeschlagen, das Lichtaustrittsende des Lichtleiters koaxial zur Patrone bzw. zur Kanüle am stirnseitigen Ende des Instruments vorzusehen.

Als Antrieb können vorteilhafterweise hydraulische oder pneumatische Antriebe zur Anwendung kommen, deren Hubkolben direkt oder durch Druckübersetzung über Zwischenmedien, z.B. mit Hilfe zweier korrelierender Kolben, auf den Verschlußkolben der Patrone wirken. Besonders vorteilhaft ist es jedoch, einen elektromotorischen Antrieb vorzusehen, der integriert eine geeignete Getriebeuntersetzung aufweist und dessen Drehbewegung über eine Gewindespindel in eine Axialbewegung umgewandelt wird. Antriebsmotor und Getriebeuntersetzung bilden vorteilhafterweise eine patronenartig im Griffkörper gehalterte Baueinheit, die durch eine axial leicht trennbare Rastkupplung mit der Gewindespindel verbindbar ist. Die normalerweise nicht sterilisierbare Antriebseinheit kann so zum Zwecke einer Sterilisation des Instruments vom Griffkörper leicht getrennt werden.

Die Verwendung eines elektromotorischen Antriebes hat den weiteren Vorteil, daß das Ausbringen des Füllmaterials aus der Kanüle optimal gesteuert werden kann. Gemäß einer weiteren vorteilhaften Ausgestaltung der Erfindung wird hierzu vorgeschlagen, den Antriebsmotor über sein abgebendes Drehmoment zu steuern, indem der Verstellweg des axial sich bewegenden Teils der Gewindespindel durch Anschläge begrenzt ist und indem eine Strombegrenzungsschaltung vorhanden ist, die bei Erreichen der Anschläge und dem danach ansteigenden Strom ein Signal für eine Änderung der Drehrichtung des Antriebsmotors liefert. Damit kann z.B. nach Entleeren der Patrone ein automatisches Zurückfahren der Gewindespindel in die Ausgangsstellung vorgesehen werden. Des weiteren kann vorteilhafterweise ein Rücklauf der Gewindespindel über einen gesonderten Schaltimpuls eingeleitet werden, falls der Inhalt der Patrone nicht vollständig benutzt wurde bzw. falls aus diesen oder anderen Gründen ein Wechsel der Patrone erwünscht ist.

Vorteilhaft kann es auch sein, nach jedem Abschalten des Antriebes, welches beispielsweise über einen Finger- oder Fußschalter erfolgen kann, die Drehrichtung automatisch kurzzeitig umzuschalten. Damit kann eine kurzzeitige Druckentlastung im Füllraum der Patrone erreicht und damit ein Nachfließen des Füllmaterials aus der Kanüle verhindert werden.

Patrone und Kanüle können an sich in einem beliebigen Winkel zur Griffkörperachse angeordnet sein; besonders vorteilhaft ist es jedoch, wenn die Patrone axial im Griffkörper angeordnet ist und mit einer geraden oder abgewinkelten Kanüle eine leicht auswechselbare Baueinheit bildet.

Das Instrument ist mit einer Kühlluft ausgestattet, wobei die Führung der Kühlluft so gestaltet ist, daß kühle Zuluft im Bereich der Heizvorrichtung in einem zwischen dieser und dem Außenmantel des Griffkörpers gebildeten Raum eingeleitet wird und die nach Überstreichen der Heizvorrichtung erwärmte Rückluft über im Griffkörper angeordnete Kanäle an das rückwärtige Ende des Instruments zurückgeleitet wird.

Nachfolgend werden zwei Ausführungsbeispiele der Erfindung näher beschrieben, die sich auf die Applikation eines geeigneten Füllmaterials zum Füllen von Wurzelkanälen, vorzugsweise zum Applizieren von Guttapercha, beziehen. Eine entsprechend modifizierte Ausführung ist auch zum Applizieren von anderen Füllstoffen oder zum Applizieren von Klebestoffen möglich und liegt im Rahmen der Erfindung.

Es zeigen:
Figur 1 das erfindungsgemäße Instrument in einer Seitenansicht im Schnitt,
Figur 2 ein Prinzipschaltbild zur Erläuterung des Funktionsablaufes,
Figur 3 eine Variante zu dem in Figur 1 gezeigten Instrument.

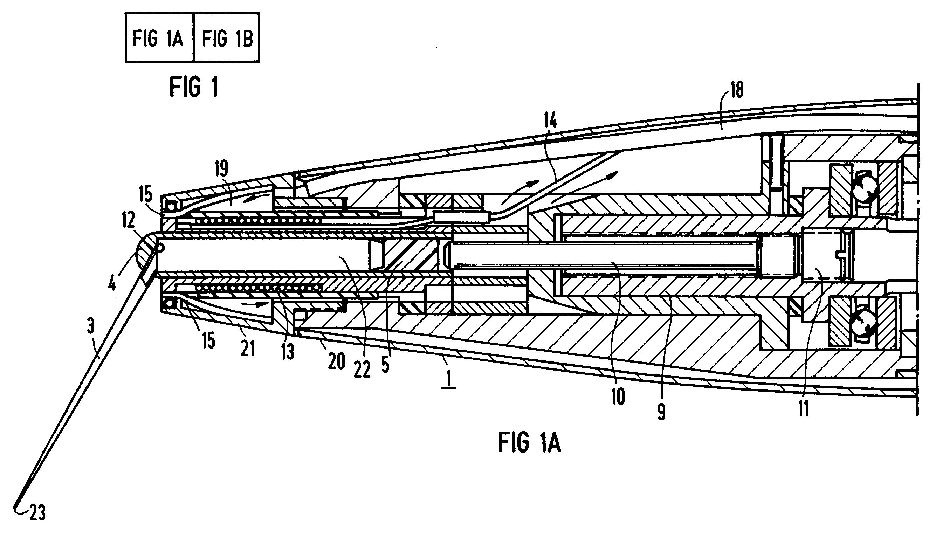

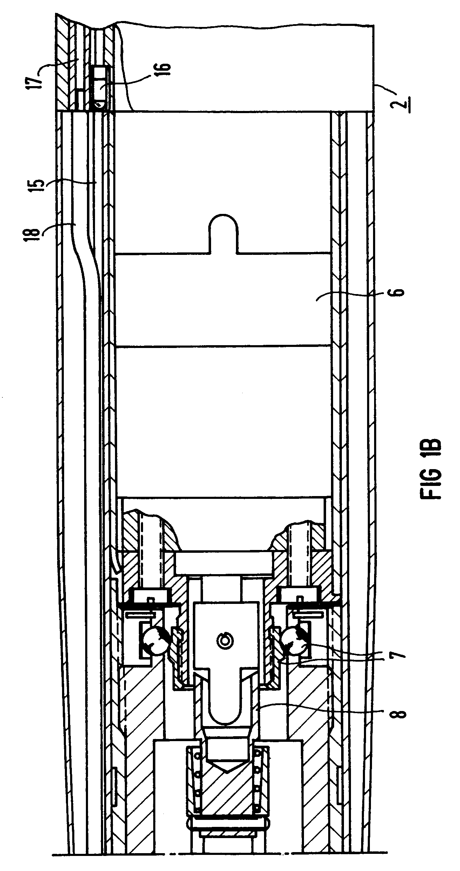

Die Figur 1 mit der Unterteilung in die beiden Abschnitte 1A und 1B zeigt das erfindungsgemäße Instrument im Längsschnitt.

Ein allgemein mit 1 bezeichneter Griffkörper ist an seinem Ende mittels einer Anschlußarmatur 2 an einem nicht dargestellten Versorgungsschlauch zur Zuführung von Luft und elektrischer Energie angeschlossen und trägt an seinem anderen, freien Ende eine Kanüle 3, die zusammen mit einer Patrone 4 zur Aufnahme eines geeigneten Klebe- oder Füllmaterials, insbesondere von Guttapercha, eine Baueinheit bildet. Die Patrone 4 bildet eine Kammer 22, die an dem der Kanüle abgewandten Ende durch einen verschiebbaren Verschlußkolben 5 verschlossen ist und applikationsseitig mit der Kanüle 3 verbunden ist, so daß, wie nachfolgend noch näher erläutert, das in der Kammer 22 befindliche Klebe- oder Füllmaterial an der Austrittsöffnung 23 ausgepreßt werden kann. Patrone 4 und Kanüle 3 sind leicht auswechselbar im Griffkörper 1 gehaltert. Während im vorliegenden Falle die Patrone in einer nicht näher bezeichneten entsprechenden Hülse des Griffkörpers eingeschraubt ist, kann sie auch z.B. mittels einer Rasteinrichtung mit freier Drehbarkeit im Griffkörper gehaltert sein.

An der Anschlußarmatur 2 ist ein Getriebemotor 6 befestigt, der bei angeschlossenem Griffkörper 1 in einen entsprechenden rückwärtigen Hohlraum ragt und dort mittels einer an sich bekannten Kugelrasteinrichtung 7 mit dem Griffkörper 1 lösbar verbunden ist. Die Antriebswelle des Getriebemotors 6 ist mittels einer geeigneten, drehmomentübertragenden Kupplung 8 mit einem Spindelantrieb 9, 10 gekuppelt, welcher die Drehbewegung in eine hin und her gehende Bewegung umwandelt. Der hin und her bewegbare Teil des Spindelantriebs, der Gewindekolben 10, wirkt mit dem Verschlußkolben 5 der Patrone 4 zusammen und bewirkt das Auspressen des Füllmaterials aus der Kanüle 3.

Der Verstellweg des Gewindekolbens 10 ist durch zwei Anschläge begrenzt; einerseits durch einen austauschbaren Anschlag 11 an dem dem Motor zugewandten Ende und andererseits durch eine Anschlagfläche 12 in der Patrone 4, an der der Verschlußkolben 5 bei entleerter Patrone zur Anlage kommt.

Der austauschbare Anschlag ermöglicht eine leichte Pflege und Wartung des Instruments bzw. des Griffkörpers.

Konzentrisch zur Patrone 4 und in engem thermischem Kontakt mit dieser ist eine Heizwicklung 13 angeordnet, die über eine entsprechende Versorgungsleitung 14 aus einer nicht dargestellten, extern des Instruments angeordneten Versorgungseinheit mit Strom versorgt wird.

Ebenfalls konzentrisch zur Patrone 4 mündet stirnseitig des Griffkörpers 1 das Ende eines aufgefächerten Lichtleiters 15, welcher in geeigneter Weise innerhalb des Griffkörpers bis zur Anschlußarmatur 2 verlegt ist und dort einer elektrischen Glühlampe 16 korrespondierend gegenübersteht, die ebenfalls von der genannten Versorgungseinheit gespeist wird. Alternativ zu der konzentrischen Mündung der Lichtleiterenden kann auch eine exzentrisch zur Kanüle verlaufende Anordnung gewählt werden.

Das Instrument wird ferner noch mit Kühlluft versorgt, die über einen Leitungskanal 17 in der Anschlußarmatur 2 an den Griffkörper herangeführt, über einen weiteren, im Griffkörper verlegten Leitungskanal 18 bis zum vorderen Ende des Griffkörpers weitergeleitet und dort in einem Hohlraum 19 ausmündet, der zwischen der Heizwicklung 13 und inneren Mantelflächen 20, 21 des Griffkörpers gebildet wird. Die zugeführte Kühlluft verhindert ein unzulässiges Erwärmen der äußeren Mantelflächen des Griffkörpers, indem sie Abstrahlungswärme von der Heizwicklung aufnimmt. Die erwärmte Rückluft wird, wie durch die Pfeile angedeutet, über nicht weiter bezeichnete Kanäle und Hohlräume an das rückwärtige Ende des Griffkörpers geführt, wo sie dann mit einer entsprechenden Rückleitung extern des Instrumentes bis zu einer geeigneten Austrittsstelle geführt wird.

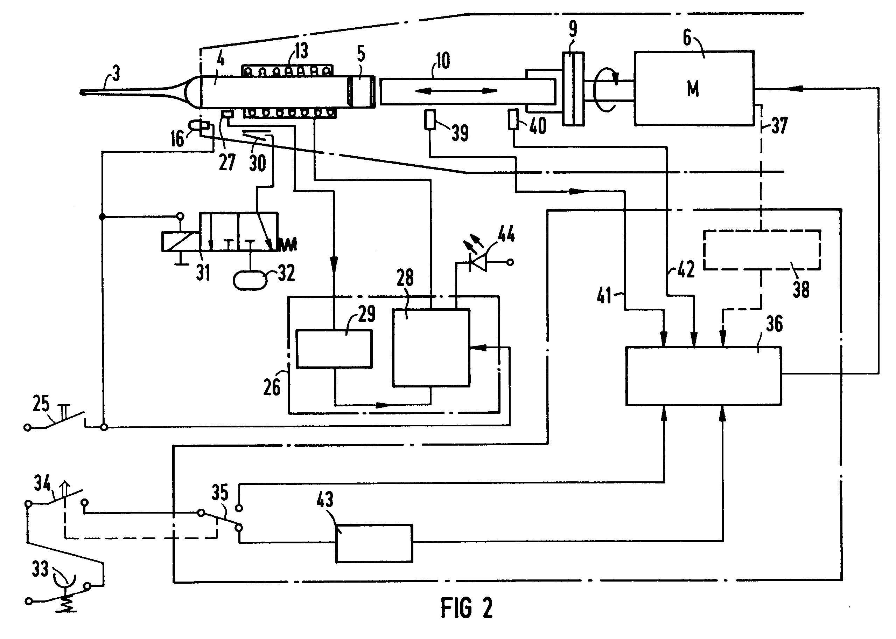

Anhand Figur 2 wird die Funktionsweise näher erläutert. Die zuvor beschriebenen, für die Funktion wesentlichen Teile des Instruments sind in dieser Darstellung stark vereinfacht dargestellt.

Mittels eines Hauptschalters 25 wird zunächst die Lampe 16 (hier stirnseitig des Instruments zur direkten Beleuchtung der Präparationsstelle dargestellt) sowie eine Steuer- und Regeleinrichtung 26 für die Heizwicklung 13 eingeschaltet. Die erforderliche Temperatur, die notwendig ist, um das in der Patrone befindliche Guttapercha in einen plastischen, fließfähigen Zustand zu halten, wird mittels eines Temperatursensors 27 überwacht. Die Einrichtung 26 enthält deshalb außer einen Regelkreis 28 einen entsprechenden Soll-/Istwert-Komparator 29.

Mit Einschalten des Hauptschalters 25 kann dem Instrument gleichsam Kühlluft zugeführt werden (hier durch eine Düse 30 dargestellt), indem ein Magnetventil 31 geschaltet wird, über welches Druckluft aus einer Druckluftquelle 32 in der zuvor beschriebenen Weise zugeführt wird. Nach einer kurzen Aufheizphase (ca. 1 Min.) wird die Betriebsbereitschaft des Instruments durch eine LED (Pos. 44) optisch angezeigt.

Wird das Instrument, welches bei Nichtgebrauch in einer Ablagevorrichtung gehaltert ist, die mit einem Klauenschalter, gekoppelt ist, der hier mit der Position 33 bezeichnet ist, aus dieser Ablagevorrichtung entnommen, wird eine Fußschalterverriegelung aufgehoben, so daß bei Betätigen eines Fußschalterkontakts 34 ein mit diesem gekoppelter Umschalter 35 eine Motorsteuereinrichtung 36 aktiviert. Der Motor 6 läuft nun in der einen Drehrichtung, wodurch der Gewindekolben 10 nach vorne in Richtung Patrone geschoben wird. Der Verschlußkolben 5 wird sodann bewegt und die inzwischen auf Fließtemperatur erwärmte Guttapercha aus der Kanüle ausgestoßen. Bei Erreichen der zuvor beschriebenen Anschläge kann über die Steuerleitung 37 ein entsprechendes Schaltsignal an einen Strombegrenzungsschaltkreis 38 gegeben werden, der sodann der Motorsteuerung 36 ein Aktivierungssignal zum Abschalten des Motors bzw. zur Drehrichtungsumkehr liefert (siehe gestrichelte Darstellung). Alternativ kann das Signal von Positionsmeldern 39, 40 über die Leitungen 41, 42 direkt an die Motorsteuerung 36 zur Beeinflussung der Spindelbewegung gegeben werden.

Soll der Vorgang an beliebiger Stelle kurzzeitig unterbrochen werden, wird der Fußschalterkontakt 34 kurz nochmals gedrückt. Der Umschalter 35 wird sodann in die gezeichnete Stellung umgeschaltet, wodurch über ein Zeitglied 43 ein kurzzeitiges Umpolen und damit Zurücksetzen des Gewindekolbens 10 erzielt wird. Bei einem erneuten Betätigen des Fußschalterkontakts 34 wird der Umschalter wieder in die andere Schaltrichtung gesetzt.

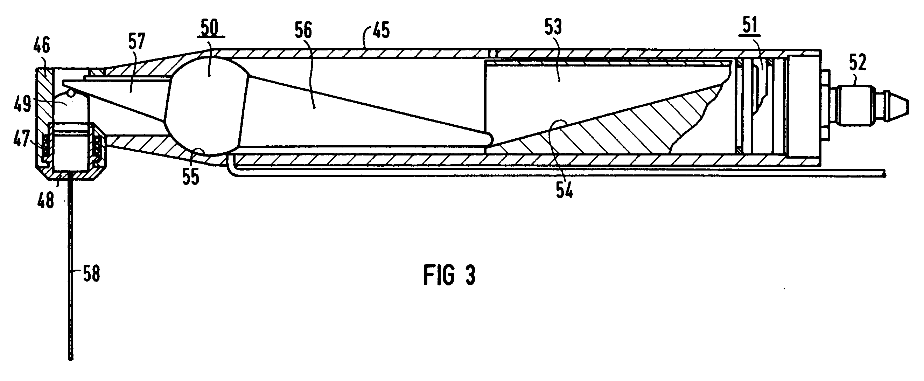

Die Figur 3 zeigt eine Instrumentenvariante mit einem Pneumatikantrieb und einer Kanülenanordnung, die senkrecht zur Längsachse des Instruments verläuft.

Ein wiederum nach Art eines Bleistifts in der Hand zu haltender Griffkörper 45 enthält ein abgewinkeltes Kopfgehäuse 46, in dem eine von einer Heizwicklung 47 umgebene Patrone 48 zur Aufnahme des Füllmaterials leicht lösbar gehaltert ist. Die Patrone 48 wirkt mit einem Kolben 49 zusammen, der über eine allgemein mit 50 bezeichnete Kipphebelmechanik von einem Druckluftantrieb 51 verstellt wird. Der Druckluftantrieb 51 enthält einen über einen Druckluftanschluß 52 mit Druckluft beaufschlagbaren Kolben 53, der einen schräg liegenden Innenkonus 54 oder eine andere geeignete schräge Fläche aufweist. Die Kipphebelmechanik 50 enthält ein kugelförmiges Lagerteil 55, an dem sich zwei Kegelansätze 56, 57 zu beiden Seiten anschließen. Während der längere Kegelansatz 56 mit der schrägen Fläche des Innenkonus 54 des Druckluftkolbens 53 zusammenwirkt, wirkt der kürzere Kegelansatz 57 mit dem Kolben 49 der Patrone 48 zusammen. Bei Druckbeaufschlagung ergibt sich durch Auflaufen der Spitze des Kegelansatzes 56 auf die schräge Fläche des Innenkonus 54 eine Kippbewegung um das Lager 55, wodurch der Materialkolben 49 im Sinne eines Ausdrückens des in der Patrone befindlichen Materials aus der Kanüle 58 verstellt wird.

Ein Vorteil dieser Lösung ist unter anderem, daß das Instrument in gewohnter Weise wie ein Bohrinstrument gehalten werden kann und daß mit relativ einfachen Mitteln eine gute Kraft- und Bewegungsübertragung von Druckluftkolben auf den Materialkolben erreicht wird.

Wenngleich im vorliegenden Ausführungsbeispiel die Rotationssymmetrieachsen der beiden Kegelansätze 56, 57 miteinander fluchten, so ist es denkbar, wenn es die baulichen Gegebenheiten erfordern sollten, deren Achsen in einem Winkel zueinander anzuordnen.

## Patentansprüche

1. Instrument zum Applizieren von Haft- oder Füllmaterialien auf Zahnflächen, mit einem langgestreckten, nach Art eines Bleistiftes in der Hand zu haltenden Griffkörper (1, 45), der in seinem Inneren eine entnehmbar gehalterte Patrone (22) zur Aufnahme eines Haft- oder Füllmaterials enthält und der einen Antrieb (6, 51) aufweist, welcher auf Stellmittel (5, 10, 49, 53) wirkt, die bei Aktivierung des Antriebes das in der Patrone befindliche Haft- oder Füllmaterial aus einer Austrittsöfffnung (23) am vorderen Ende des Instruments pressen, und mit einer im Griffkörper (1, 45) angeordneten Heizvorrichtung (13, 47), mittels der das Haft- oder Füllmaterial auf eine zum Applizieren geeignete Konsistenz gebracht wird, **dadurch gekennzeichnet,** daß eine Kühlluftführung vorhanden ist, die Kühlluft im Bereich der Heizwicklung (3) der Heizvorrichtung zwischen dieser und den äußeren Mantelflächen (20, 21) des Griffkörpers (1) zuführt, wobei die nach Überstreichen der Heizvorrichtung erwärmte Rückluft über benachbart angeordnete Kanäle an das rückwärtige Ende des Griffkörpers (1) geleitet wird.

2. Instrument nach Anspruch 1, bei dem die Patrone (4, 48) mit einer am einen Ende des Griffkörpers angeordneten Kanüle (3, 58) zum Applizieren des Haft- oder Füllmaterials verbunden ist.

3. Instrument nach Anspruch 1 oder 2, **dadurch gekennzeichnet,** daß ein elektromotorischer Antrieb mit Getriebeuntersetzung (6) vorgesehen ist, dessen Drehbewegung über eine Gewindespindel (9, 10) in eine Axialbewegung umgewandelt wird.

4. Instrument nach Anspruch 3, **dadurch gekennzeichnet,** daß der Antriebsmotor der Getriebeuntersetzung (6) eine patronenartig im rückwärtigen Teil des Griffkörpers (1) gehalterte Baueinheit darstellt, die durch eine axial leicht lösbare Rastkupplung (7) mit dem Griffkörper und über eine drehmomentübertragende Kupplung (8) mit der Gewindespindel (9, 10) verbunden ist.

5. Instrument nach Anspruch 3 oder 4, **dadurch gekennzeichnet**, daß der Verstellweg des axial sich bewegenden Teils (10) der Gewindespindel (9, 10) durch Anschlagmittel (11, 12) begrenzt ist, und daß eine Strombegrenzungsschaltung (38) vorhanden ist, die bei Erreichen der Anschlagmittel den Antriebsmotor abschaltet oder dessen Drehrichtung ändert.

6. Instrument nach Anspruch 3 oder 4, **dadurch gekennzeichnet**, daß im Verstellweg des axial sich bewegenden Teils (10) der Gewindespindel (9, 10) Positionsmelder (39, 40) vorhanden sind, durch deren Signale die Spindelbewegung beeinflußt wird.

7. Instrument nach Anspruch 6, **dadurch gekennzeichnet**, daß bei Erreichen des einen Anschlagmittels (12) ein Schaltimpuls für eine automatischen Drehrichtungsumkehr und damit Rücklauf des Gewindekolbens (10) eingeleitet wird.

8. Instrument nach einem der Ansprüche 3 bis 7, **dadurch gekennzeichnet,** daß durch einen gesonderten Schaltimpuls, vorzugsweise mittels eines Fußschalterkontaktes (34), ein kurzzeitiger Rücklauf der Gewindespindel (9, 10), vorzugsweise nach dem Abschalten des Antriebs (6, 51), eingeleitet wird.

9. Instrument nach einem der Ansprüche 1 bis 8, **dadurch gekennzeichnet**, daß eine integrierte Beleuchtungseinrichtung vorhanden ist, mit einer Glühlampe (16), die entweder in unmittelbarer Nachbarschaft der Patrone (4) oder im rückwärtigen Teil des Körpers angeordnet ist, wobei die Glühlampe (16) dann mit einer Lichtleiteranordnung (15) korrespondiert, deren Lichtaustrittsende stirnseitig und vorzugsweise konzentrisch zur Kanüle des Griffkörpers angeordnet ist.

10. Instrument nach Anspruch 9, **dadurch gekennzeichnet**, daß die das Haft- oder Füllmaterial aufnehmende Patrone (49) quer zur Längsachse des Instruments in diesem angeordnet ist und zwischen dem Verschlußkolben (49) und dem Stellglied (53) entsprechende Kraft- und Bewegungsübertragungsmittel (50) vorhanden sind.

11. Instrument nach Anspruch 10, **dadurch gekennzeichnet**, daß eine vorzugsweise als Kugelhebel mit beidseitigen Kegelansätzen (56, 57) ausgebildete Kipphebelmechanik (50) vorgesehen ist, mit der die Kraft- und Bewegungsübertragung erzielt wird.

12. Instrument nach Anspruch 11, **dadurch gekennzeichnet**, daß die beiden Kegelansätze (56, 57) gleichachsig angeordnet sind.

13. Instrument nach Anspruch 11, **dadurch gekennzeichnet,** daß der der Patrone (49) abgewandte Kegelansatz (56) mit einer eine schiefe Ebene bildenden Fläche (54) eines vorzugsweise pneumatisch beaufschlagten Verstellkolbens (53) zusammenwirkt.

## Claims

1. Instrument for applying adhesive or filler materials to tooth surfaces, having an extended gripping body (1, 45) to be held in the hand like a pencil, the gripping body containing in its interior a cartridge (22), supported so that it can be removed, for accommodating an adhesive or filler material and having a drive (6, 51) which operates on actuating means (5, 10, 49, 53), which with activation of the drive press the adhesive or filler material located in the cartridge out of an outlet opening (23) at the front end of the instrument, and the instrument having a heating device (13, 47) arranged in the gripping body (1, 45), by means of which device the adhesive or filler material is brought to a consistency suitable for application, characterized in that there is a cooling-air duct which supplies cooling air in the region of the heating coil (3) of the heating device between the latter and the outer surface areas (20, 21) of the gripping body (1), whereby the returned air which is heated after passing over the heating device is conducted by way of adjacently arranged channels to the rear end of the gripping body (1).

2. Instrument according to claim 1, where the cartridge (4, 48) is connected to a channel (3, 58) arranged at the one end of the gripping body for the application of the adhesive or filler material.

3. Instrument according to claim 1 or 2, characterized in that an electromotive drive with gear reduction system (6) is provided, the rotary movement of which is converted by way of a threaded spindle (9, 10) into an axial movement.

4. Instrument according to claim 3, characterized in that the drive motor of the gear reduction system (6) represents a structural unit supported in a cartridge-like manner in the rear part of the gripping body (1), the structural unit being connected by way of a latch coupling (7), which can be easily axially released, to the gripping body and by way of a torque-transmitting coupling (8) to the threaded spindle (9, 10).

5. Instrument according to claim 3 or 4, characterized in that the adjusting path of the axially moving part (10) of the threaded spindle (9, 10) is limited by stopping means (11, 12), and in that there is a current-limiting circuit (38) which, upon reaching the stopping means, disconnects the drive motor or changes its direction of rotation.

6. Instrument according to claim 3 or 4, characterized in that in the adjusting path of the axially moving part (10) of the threaded spindle (9, 10) position indicators (39, 40) are present, the signals of which influence the spindle movement.

7. Instrument according to claim 6, characterized in that upon reaching the one set of stopping means (12) a switching pulse for an automatic reversal of the direction of rotation and therefore a return motion of the threaded piston (10) is introduced.

8. Instrument according to one of claims 3 to 7, characterized in that by means of a separate switching pulse, preferably by means of a foot switch contact (34), a temporary return motion of the threaded spindle (9, 10), preferably after the disconnection of the drive (6, 51), is introduced.

9. Instrument according to one of claims 1 to 8, characterized in that an integrated illumination device is present, having an incandescent lamp (16), which is arranged either in the immediate vicinity of the cartridge (4) or in the rear part of the body, with the incandescent lamp (16) then corresponding with a light guide arrangement (15), the light outlet end of which is arranged at the end and preferably concentrically to the channel of the gripping body.

10. Instrument according to claim 9, characterized in that the cartridge (49) accommodating the adhesive or filler material is arranged in the instrument at right angles to its longitudinal axis, and between the closing piston (49) and the actuator (53) there are corresponding means (50) for transmitting force and movement.

11. Instrument according to claim 10, characterized in that a rocking lever mechanism (50), preferably constructed as a ball lever with bevelled ends (56, 57) on both sides, is provided, with which the transmission of force and movement is attained.

12. Instrument according to claim 11, characterized in that the two bevelled ends (56, 57) are arranged coaxially.

13. Instrument according to claim 11, characterized in that the bevelled end (56) directed away from the cartridge (49) cooperates with a surface (54), which surface forms an inclined plane, of an adjusting piston (53) which is preferably pneumatically loaded.

## Revendications

1. Instrument pour appliquer des produits adhésifs ou des produits d'obturation sur des surfaces de dents, comportant un corps de préhension (1,45) oblong destiné à être tenu à la main à la manière d'un crayon, contenant à l'intérieur une cartouche (22) retenue de façon amovible et destinée à recevoir un produit adhésif ou un produit d'obturation et comportant un dispositif d'entraînement (6,51), qui agit sur des moyens de réglage (5, 10,49,53) qui, lors de l'activation du dispositif d'entraînement, pousse le produit adhésif ou le produit d'obturation se trouvant dans la cartouche, dans une ouverture de sortie (23) à l'extrémité avant de l'instrument, et un dispositif de chauffage (13,47) disposé dans le corps de préhension (1,45) et au moyen duquel le produit adhésif ou le produit d'obturation est amené à une consistance convenant pour son application, caractérisé en ce qu'il est prévu un guidage de l'air de refroidissement, qui envoie de l'air de refroidissement dans la zone de la bobine chauffante (3) du dispositif de chauffage entre ce dernier et les surfaces latérales extérieures (20,21) du corps de préhension (1), l'air de renvoi, qui est chauffé après avoir balayé le dispositif de chauffage, étant envoyé par des canaux voisins, à l'extrémité arrière du corps de préhension (1).

2. Instrument suivant la revendication 1, dans lequel la cartouche (4,48) est reliée à une canule (3,58), disposée sur une extrémité de l'organe de préhension et servant à appliquer le produit adhésif ou le produit d'obturation.

3. Instrument suivant la revendication 1 ou 2, caractérisé par le fait qu'il est prévu un dispositif d'entraînement à moteur électrique comportant une transmission démultiplicatrice (6), dont le mouvement de rotation est converti, par l'intermédiaire d'une broche filetée (9,10), en un déplacement axial.

4. Instrument suivant la revendication 3, caractérisé par le fait que le moteur d'entraînement de la transmission démultiplicatrice (6) représente une unité de construction, retenue à la manière d'une cartouche dans la partie arrière de l'organe de préhension (1) et qui est reliée, par un accouplement d'encliquetage (7), qui peut être aisément desaccouplé axialement, à l'organe de préhension et, par l'intermédiaire d'un accouplement (8) transmettant le couple, à la broche filetée (9,10).

5. Instrument suivant la revendication 3 ou 4, caractérisé en ce que le trajet de déplacement de la partie mobile axialement (10) de la broche filetée (9,10) est limité par des moyens de butée (11,12), et qu'il est prévu un circuit (38) de limitation du courant, qui arrête le moteur d'entraînement ou modifie sa vitesse de rotation, lorsque les moyens de butée sont atteints.

6. Instrument suivant la revendication 3 ou 4, caractérisé en ce que dans le trajet de déplacement de la pièce mobile axialement (10) de la broche filetée (9,10) sont disposés des transmetteurs de position (39,40), dont les signaux influent sur le déplacement de la broche.

7. Instrument suivant la revendication 6, caractérisé en ce que lorsque l'un des moyens de butée (12) est atteint, une impulsion de commutation est déclenchée pour une inversion automatique du sens de rotation et par conséquent un retour du piston fileté (10).

8. Instrument suivant l'une des revendications 3 à 7, caractérisé par le fait qu'un retour de brève durée de la broche filetée (9,10) est déclenché par une impulsion particulière de commutation, de préférence au moyen d'un contact (34) d'un interrupteur à pédale, et ce de préférence après l'interruption du dispositif d'entraînement (6,51).

9. Instrument suivant l'une des revendications 1 à 8, caractérisé par le fait qu'il est prévu un dispositif d'éclairage intégré, comportant une lampe à incandescence (16), qui est disposée soit à proximité immédiate de la cartouche (4), soit dans la partie arrière du corps, la lampe à incandescence (16) correspondant alors avec un dispositif formant guide de lumière (15), dont l'extrémité de sortie de la lumière est disposée frontalement et de préférence concentriquement par rapport à la canule du corps de préhension.

10. Instrument suivant la revendication 9, caractérisé en ce que la cartouche (49) de réception du produit adhésif ou du produit d'obturation est disposée transversalement par rapport à l'axe longitudinal de l'instrument, à l'intérieur de ce dernier, et que des moyens adéquats (50) de transmission de force et de mouvement sont prévus entre le piston de fermeture (49) et l'organe de réglage (53).

11. Instrument suivant la revendication 10, caractérisé en ce qu'il est prévu un mécanisme à levier basculant (50), qui est agencé de préférence sous la forme d'un levier à rotule comportant des deux côtés des prolongements coniques (56,57), et qui réalise la transmission de force et de mouvement.

12. Instrument suivant la revendication 11, caractérisé par le fait que les deux prolongements coniques (56,57) sont coaxiaux.

13. Instrument suivant la revendication 11, caractérisé par le fait que le prolongement conique (56), éloigné de la cartouche (49), coopère avec une surface (54), qui forme un plan oblique, d'un piston de réglage (53) alimenté de préférence pneumatiquement.
